# EUROPÄISCHE PATENTSCHRIFT

(11) **EP 3 103 579 B1**
(45) Veröffentlichungstag und Bekanntmachung des Hinweises auf die Patenterteilung: **23.10.2019**
(21) Anmeldenummer: 16173795.2
(22) Anmeldetag: 09.06.2016
(51) Int. Cl.: B23K 11/30, B23K 11/11, B23B 5/16

(54) **KAPPENFRÄSER MIT EINEM ELEKTRISCHEN ANTRIEBSMOTOR**
TIP DRESSER WITH AN ELECTRIC DRIVE MOTOR
FRAISE DE RODAGE COMPRENANT UN MOTEUR ELECTRIQUE

(30) Priorität: 12.06.2015 DE 202015103106 U
(43) Veröffentlichungstag der Anmeldung: 14.12.2016
(73) Patentinhaber: SVS Schweißtechnik GmbH, 45475 Mülheim (DE)
(72) Erfinder: SCHMIDT, Harald, 45144 Essen (DE); WIECZOREK, Gary, 45739 Oer-Erkenschwick (DE)
(74) Vertreter: Patentanwälte Bauer Vorberg Kayser

(56) Entgegenhaltungen:
- EP-A1- 2 845 678
- JP-A- 2006 341 271

## Beschreibung

Die Erfindung bezieht sich auf einen Kappenfräser zum Fräsen des Schweißbereichs von Punktschweißelektroden, der einen elektrischen Antriebsmotor und mindestens ein Fräsmesser aufweist.

Aus der EP 2 845 678 A1 ist ein Verfahren zum Fräsen von Elektroden für. Schweißvorrichtungen bekannt. Das Verfahren ist in der Lage, ein unregelmäßiges Fräsen zu erfassen, wenn ein maximales Drehmoment nicht auftritt. Das Verfahren verwendet einen elektrischen Antriebsmotor, der als Servo-Motor ausgebildet ist und mindestens ein von diesem Motor angetriebenes Fräsmesser. Der Servo-Motor liefert ein Drehmomentsignal an eine Steuereinheit, wenn dieses Signal mindestens einen vorgegebenen Wert erreicht. Die Steuereinheit stellt ein unzureichendes Fräsen fest, wenn ein Signal für ein vorgegebenes Drehmoment während der normalen Fräszeit nicht geliefert wurde.

Die JP 2006-341271 A beschreibt ein Verfahren zur Überwachung des Bearbeitungszustandes während des Fräsens von Elektroden für Schweißvorrichtungen. Das Verfahren verwendet einen elektrischen Antriebsmotor, der als Servo-Motor ausgebildet ist und mindestens ein von diesem Motor angetriebenes Fräsmesser. Eine Steuereinheit des Servo-Motors liefert ein Servo-Steuersignal an eine Vergleicherstufe. Die Vergleicherstufe hat eine Alarmvorrichtung, die ein Alarmsignal liefert, wenn das Servo-Steuersignal Werte außerhalb eines vorgegebenen Wertebereichs einnimmt.

Kappenfräser werden in Punktschweißanlagen eingesetzt, wie sie beispielsweis häufig in der Automobilproduktion zu finden sind. Sie sind üblicherweise entlang einer Montagestrecke für Blechteile angeordnet. Die Punktschweißverbindungen werden zumeist durch einen Roboter durchgeführt. In der Regel ist ein Kappenfräser einem Schweißroboter zugeordnet. Schweißroboter haben Schweißzangen, beispielsweise C-Zangen oder X-Zangen. Zumeist weisen die Punktschweisselektroden Elektrodenkappen auf. Diese Elektrodenkappen sind austauschbar.

Während des Betriebes der Punktschweißzangen werden die Punktschweißelektroden abgenutzt. Während des Schweißbetriebs tritt eine ständige Veränderung der Elektroden auf. Jedwede geometrische Änderung führt jedoch zu einer Veränderung der Schweißbedingungen. Häufig bilden sich Wülste am Rand der Elektroden, die eine Vergrößerung der tatsächlichen Kontaktfläche bewirken. Teilweise verzundern die Elektroden auch, sie nehmen auch Fremdmaterial anderer Art auf. Beim Schweißen können sich an den Punktschweißelektroden auch Verunreinigungen anlagern, dies tritt z.B. beim Schweißen von verzinkten Karosserieblechen auf, wobei sich beispielsweise Zinkoxid anlagert. Die Verunreinigung bildet einen ohmschen Widerstand.

Dies alles führt dazu, dass das Schweißergebnis nicht gleichbleibend ist.

Durch die Kappenfräser ist es möglich, die Wirkflächen der Elektroden jeweils wieder aufzuarbeiten. Derartige Kappenfräser sind beispielsweise aus EP 958 092 B1, US 6,863,597 B2, US 6,666,631 B2, DE 19 825 771 A1 und DE 42 13 571 C2 bekannt. Unter "Wirkflächen der Elektroden" werden die Schweißbereiche verstanden.

Um die Elektroden fräsen zu können, muss sich ein Kappenfräser in Nähe eines Schweißroboters bzw. einer Schweißzange und in geeigneter Position hierzu befinden. Ist das Aufarbeiten der Elektroden abgeschlossen, stört der Kappenfräser, da er sich zumeist im Bewegungsbereich des Schweißroboters befindet. Es ist daher in vielen Installationen bereits so vorgesehen, dass der Kappenfräser mit einer Einschwenkvorrichtung verbunden ist, die ihn normalerweise aus dem Arbeitsbereich des Schweißroboters heraus bewegt und nur für eine Fräsbehandlung in diesen Arbeitsbereich hinein bewegt. Der Kappenfräser muss präzise und sicher anzusteuern sein. Die Bewegung, die er durchführt, muss sich den örtlichen Bedingungen anpassen können und sicher, ausreichend schnell und zuverlässig durchführbar sein.

All dies ist vor dem Hintergrund zu betrachten, dass die Fertigung von Kraftfahrzeugen, insbesondere Karosseriegruppen, ein komplexer Vorgang ist, der möglichst wenig unterbrochen werden soll, weil Betriebsstörungen immer auch Produktionsausfälle bedeuten sind und zudem viele Nacharbeiten an den geschweißten Produkten nach sich ziehen.

Beim Fräsen des Schweißbereichs der Punktschweißelektroden wird etwas Material abgetragen. Üblicherweise sind dies maximal 1/10 bis höchstens 2/10 mm. Der Fräsvorgang dauert ca. 2 bis drei Sekunden, der Fräser dreht sich mit etwa 250 U/min. Durch das Fräsen ändert sich die Geometrie der Punktschweißelektrode. Es sind nun Schweißzangen mit Punktschweißelektroden bekannt, die nach jedem Fräsvorgang eine Initialisierung durchführen. Weiterhin wird es gewünscht, gewisse Parameter der Punktschweißzangen zu erfassen, beispielsweise die Schließkraft, mit der die Punktschweißelektroden zusammengepresst werden, der optische Zustand der Kappe der Punktschweißelektrode, die Form der gefrästen Punktschweißelektrode usw.. Hierfür werden Sensoren eingesetzt, zu den Sensoren gehören beispielsweise eine Kraftmessdose, eine Kamera, ein Lichtsensor, eine Messstation, insbesondere eine optische oder geometrische Messstation, die die Abmessungen optisch oder mechanisch erfasst.

Die Erfassung derartiger Parameter bedeutet einen Eingriff in die Steuerung der Punktschweißanlage selbst, insbesondere in die Steuerung einer Punktschweißzange. Nun werden in der Regel Punktschweißzangen einschließlich ihrer Steuerungen von anderen Herstellern gefertigt als Fräseinrichtungen der hier in Rede stehenden Art, also als Kappenfräser. Die einzelnen Abläufe der Steuerung einer Punktschweißzange sind relativ kompliziert. Für das Fräsen müsste ein eigener Verfahrensablauf eingerichtet werden. Ein Hersteller eines Kappenfräsers ist jedoch bemüht, seine Kappenfräser für möglichst alle Punktschweißvorrichtungen unterschiedlicher Hersteller einsetzen zu können. Hat er sich auf einen Hersteller festgelegt, ist es in der Regel schwierig, den Kappenfräser für Schweißvorrichtungen anderer Hersteller einzusetzen. Es müsste jeweils eine spezielle Anpassung erfolgen. Dies ist aufwendig.

Beim Fräsbetrieb kommt es immer wieder vor, dass die Punktschweißelektroden mit zu hoher Anpresskraft gegen die Fräsmesser gedrückt werden. Dann wird der Fräsvorgang nicht mehr so durchgeführt, wie er bei normalerweise vorliegender, vorgeschriebener Anpresskraft ausgeführt wird. Es kann zu einem Verklemmen der Fräsmesser kommen. Im allgemeinen Fall wird deutlich mehr Material abgetragen. Wenn der Anpressdruck hoch ist im Vergleich zu normalem Anpressdruck kann es zu einem Verstopfen des Kappenfräsers kommen. Bei zu hohem Anpressdruck wird häufig auch nicht die tatsächlich gewünschte Form des Wirkungsbereichs der Punktschweißelektrode erhalten. Oft kommt es zu einem Grat auf dem Wirkungsbereich, es kommt zu tiefen Einschnitten im Wirkungsbereich usw.. Der Verschleiß der Fräsmesser steigt mit wachsender Anpresskraft.

All dies ist vor dem geschilderten Hintergrund zu betrachten, dass die Punktschweißvorrichtungen eine hohe Verfügbarkeit aufweisen müssen. Es muss auch das Fräsen mit hoher Zuverlässigkeit ordnungsgemäß durchgeführt werden, damit die Verfügbarkeit gewährleistet ist. Bei unkontrolliert hohem Anpressdruck ist dies aber nicht gegeben.

Der Hersteller eines Kappenfräsers wird in der Regel zur Verantwortung gezogen, wenn ein Fräsvorgang nicht ordnungsgemäß durchgeführt wurde und gegebenenfalls die Produktion deswegen angehalten werden musste. Er ist im Allgemeinen nicht in der Lage, nachzuweisen, dass der Fehler nicht an dem von ihm eingesetzten Kappenfräser, sondern an der Punktschweißvorrichtung, meistens am Anpressdruck der Punktschweißzangen liegt. Es besteht daher ein Bedürfnis dafür, dass der Hersteller des Kappenfräsers in irgendeiner Form überprüfen kann und auch den Nachweis führen kann, dass sein Kappenfräser ordnungsgemäß gearbeitet hat, aber unter falschen Bedingungen eingesetzt wurde.

Hier setzt nun die Erfindung ein. Sie hat es sich zur Aufgabe gemacht, einen Kappenfräser dahingehend weiterzubilden, dass er eine Nachweismöglichkeit dafür liefert, dass der Kappenfräser überfordert wurde, beispielsweise ein zu hoher Anpressdruck der Punktschweißelektroden auf die Fräsmesser vorlag.

Diese Aufgabe wird gelöst durch einen Kappenfräser mit den Merkmalen des Anspruchs 1.

Durch Erfassen des Motorstroms ist eine einfache und auch kostengünstige Möglichkeit gegeben, eine Überlastung des Kappenfräsers auch im Nachhinein nachzuweisen. In der Aufzeichnungseinheit wird der Motorstrom gespeichert. Die gespeicherten Werte können abgerufen und weiterverarbeitet werden. Die Werte werden im Kappenfräser selber, nämlich in der Aufzeichnungseinheit, gespeichert. Bei normalem Servicebetrieb, aber auch bei speziellen Notwendigkeiten, kann der Hersteller des Kappenfräsers vor Ort nachprüfen, wie der Kappenfräser beansprucht wurde, ob gegebenenfalls eine zu hohe Belastung vorgelegen hat.

Vorzugsweise ist die Aufzeichnungseinheit im Gehäuse des Kappenfräsers angeordnet, z.B. in der Steuerung oder einer Box. Vorzugsweise ist die Aufzeichnungseinheit für Unkundige verborgen, insbesondere nur mit einem speziellen Zugangsmittel erreichbar.

Die Werte werden digital gespeichert. Es genügt eine relativ geringe zeitliche Auflösung. Es genügt zum Beispiel, wenn eine Aufzeichnung alle 0,1 Sekunden erfolgt. Allgemein ist eine Aufzeichnung im Bereich von 0,04 bis 3, insbesondere 0,06 bis 0,5 Sekunden Abstand vorteilhaft. Die Aufzeichnung erfolgt ohnehin nur in der Zeit, in der der Fräsvorgang selbst durchgeführt wird. Da die Fräsvorgänge in großen zeitlichen Abständen erfolgen und auch relativ wenig Zeit insgesamt beanspruchen, denn es werden insgesamt nur ca. 5 bis 15 Umdrehungen für einen Fräsvorgang durchgeführt, ist die Anzahl der aufzuspeichernden Messwerte insgesamt relativ gering. Dies führt dazu, dass mit relativ kostengünstigen Speichern gearbeitet werden kann. So reicht die Aufnahmekapazität eines normalen, kostengünstigen USB-Sticks mit einer Kapazität von wenigen MByte in der Regel aus.

Als vorteilhaft hat es sich erwiesen, wenn der Kappenfräser ein Überlastsignal ausgibt. Hierzu wird mindestens ein Schwellenwert für den Motorstrom festgelegt. Wird der Schwellenwert überschritten, erfolgt ein Signal. Dieses kann akustisch und/oder optisch sein. Es kann auch dazu verwendet werden, den zugehörigen Schweißroboter anzusteuern.

Es wird angestrebt, dass unabhängig von einem Überlastzustand des Kappenfräsers dennoch der Fräsvorgang weiter durchgeführt wird. Es soll erreicht werden, dass auf jeden Fall ein Fräsvorgang stattfindet, auch wenn dieser nicht optimal ist. Dadurch ist gewährleistet, dass kein Stopp der Produktion auftritt. Die Qualität der Schweißpunkte ist abhängig von der konkreten Form und dem Zustand des Schweißbereichs. Nicht ordnungsgemäß gefräste Schweißbereiche können unzureichende Schweißergebnisse liefern.

Gemäß einer der beiden alternativen Ausführungsformen der Erfindung erfolgt eine Aufzeichnung nur dann, wenn der Motorstrom oberhalb eines Schwellenwertes liegt. Solange der Motorstrom im normalen Bereich bleibt, ist eine Aufzeichnung nicht notwendig. Dies spart Platz auf dem Aufzeichnungsmedium. Es hat sich als vorteilhaft herausgestellt, zumindest Anfangszeit und Endzeit eines Fräsvorgangs festzuhalten, also den Zeitpunkt einschließlich des Datums, an dem der Motorstrom eingeschaltet wird und den Zeitpunkt, an dem er ausgeschaltet wird. Auf diese Weise hat man einen Überblick über den tatsächlichen Einsatz des Kappenfräsers.

Es ist auch möglich, mehrere Schwellenwerte festzulegen. In Abhängigkeit vom eingesetzten Elektromotor und von praktischen Fräsversuchen können mehrere Schwellenwerte festgelegt werden. Ein erster Schwellenwert liegt bei der oberen Grenze des Normalbetriebs des Motors, z.B. plusminus 30% vom normalen Stromwert. Ein zweiter Schwellenwert liegt bei einem höheren Motorstrom, beispielsweise 1,5 bis 3fach höher, hier liegt schon ein Betrieb im Überlastbereich vor. In diesem Bereich ist das Fräsergebnis im Allgemeinen schlechter als zwischen dem ersten und den zweiten Schwellenwert. Schließlich kann noch ein dritter Schwellenwert definiert werden, der eine absolute Grenze für den eingesetzten Elektromotor darstellt. Er liegt oberhalb des zweiten Schwellenwerts. Insgesamt, insbesondere durch mehrere Schwellenwerte, kann nachgewiesen werden, ob eine Schweißzange während des Schweißvorgangs unterschiedliche Betriebszustände hatte oder nicht und wann dies vorlag. Vorteilhafterweise werden pro Fräsvorgang mindestens 3, insbesondere mindestens 6 Werte für den Motorstrom abgespeichert.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im Folgenden näher erläutert wird. In dieser Zeichnung zeigen:
Figur 1: eine perspektivische Darstellung eines Kappenfräsers mit einem elektrischen Antriebsmotor und mindestens einem Fräsmesser, dem ein Strommesser und eine Aufzeichnungseinheit zugeordnet sind,
Figur 2: ein Blockschaltbild in vereinfachter Auslegung des Motorstromkreises, des Strommessers und der Aufzeichnungseinheit mit Ausgangsanschluss,
Figur 3: den Verlauf einiger Werte (Signale) des Motorstroms I über der Zeit t als Diagramm, dargestellt sind drei Fräszyklen mit drei Gruppen von Signalen und
Figur 4: ein Diagramm wie Figur 3, nunmehr Anzeige von Signalen bzw. Werten, die oberhalb eines ersten und teils auch eines zweiten Schwellenwertes liegen.

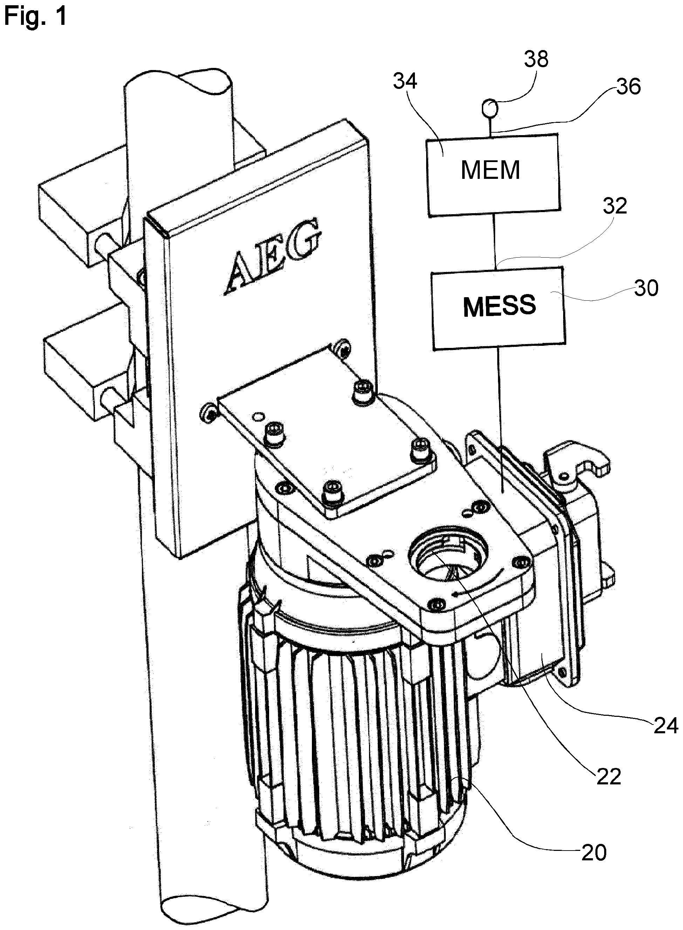

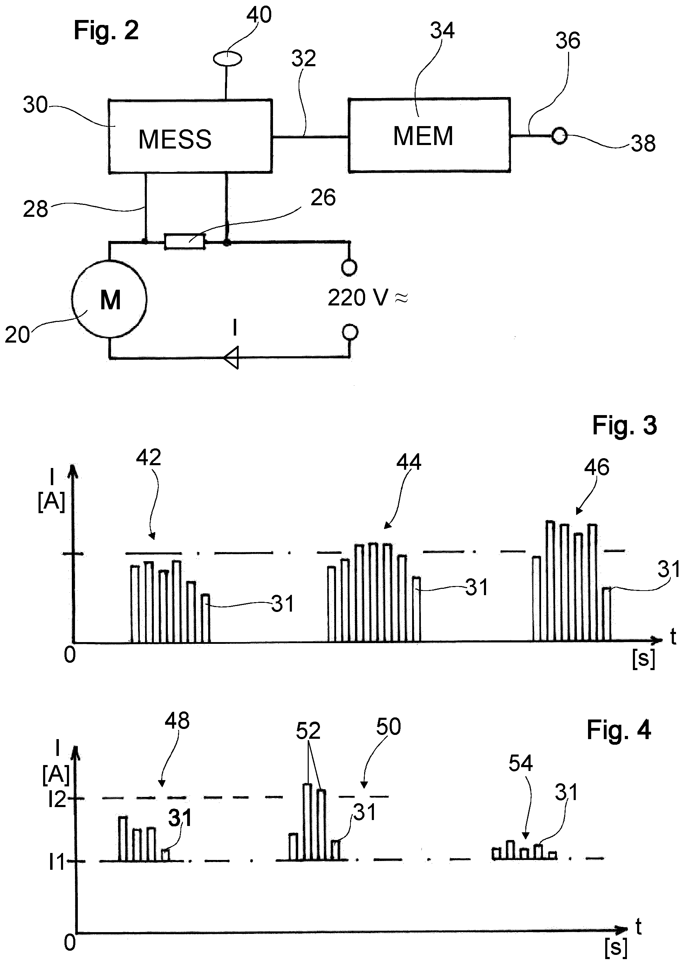

Der Kappenfräser nach Figur 1 ist für ein Fräsen des Schweißbereiches von Punktschweißelektroden bestimmt. Derartige Elektroden sind allgemein bekannt, sie sind dem Fachmann geläufig, sodass sie hier nicht im Einzelnen dargestellt werden müssen. Der Kappenfräser hat einen Antriebsmotor 20 und ein Fräsmesser 22. Am Gehäuse des Antriebsmotors 20 ist eine Box 24 befestigt. In dieser sind alle im Folgenden beschriebenen elektrischen Teile untergebracht. Aus der Box 24 führt eine elektrische Anschlussleitung (in der Figur 1 nicht ersichtlich), über die der Antriebsmotor 20 mit Spannung versorgt wird. Diese Anschlussleitung ist in Figur 2 symbolisch dargestellt durch zwei Kontakte, zwischen denen die Netzspannung 220 V angegeben ist. Dies alles gehört zum Stand der Technik.

Wie Figur 2 zeigt, fließt in den elektrischen Zuleitungen zum Motor der Strom I. Er fließt auch durch einen Widerstand 26, der einen sehr geringen Wert in Ohm hat. Er wird auch als Shunt-Widerstand bezeichnet. An ihm fällt eine geringe Spannung ab, die abfallende Spannung wird über die beiden Zuleitungen 28 der Stufe MESS, einem Strommesser 30, zugeleitet. Im Strommesser 30 ist der jeweils aktuelle analoge Wert des Stroms I als kleiner Spannungswert vorhanden. Er wird in einer A/D-Stufe, die sich im Strommesser 30 befindet, digitalisiert. Es liegen am Ausgang des Strommessers 30 digitale Signale 31 der Stromwerte an, die in einer gewissen Zeitfolge t abgegeben werden. Diese Signale werden in einer Stufe MEM, einer Aufzeichnungseinheit 34, gespeichert. An deren Ausgang 36 ist ein Ausgangsanschluss 38 vorgesehen. Am Ausgangsanschluss 38 können die in der Aufzeichnungseinheit 34 gespeicherten Werte abgerufen werden. Der Ausgangsanschluss 38 kann beispielsweise so gebildet sein, dass er einen Steckplatz für einen handelsüblichen USB-Stick aufweist, der von außen, außerhalb der Box 24, zugänglich ist. Der USB-Stick ist selbst der gesamte Speicher oder ein Teil des Speichers der Aufzeichnungseinheit 34. Der andere Teil befindet sich dann in der Box 24. Wird der USB-Stick entnommen, kann er durch einen anderen ersetzt werden, der entnommene Stick kann dann an anderem Ort ausgewertet werden. Es ist auch möglich, dass die Aufzeichnungseinheit 34 nur einen internen Speicher hat und durch Einstecken eines USB-Sticks am Ausgangsanschluss 38 ein Startsignal gegeben wird, dass die im Speicher aufgespeicherten Werte auf den USB-Stick übertragen werden.

Die Digitalisierung kann in relativ groben Stufen stattfinden. Es genügt eine Auflösung der Stromsignale im Bereich von ungefähr 50 mA. Allgemein genügt eine Auflösung in einem Bereich von 1 mA bis 500 mA. Der zeitliche Takt der Digitalisierung der Stromwerte liegt typischerweise zwischen 0,1 und 20 Sekunden.

Die Figuren 3 und 4 zeigen typische Signale 31 der digitalisierten Stromwerte. In Figur 3 sind Signale 31 von drei einzelnen Fräsvorgängen gezeigt, von jedem Fräsvorgang werden 6 bis 7 Signale erhalten. Dies läuft auf etwa einen Stromwert pro Umdrehung des Fräsmessers hinaus. Eine höhere Auflösung wird in der Praxis in der Regel eingesetzt, die gezeigte Auflösung ist zwar praktisch möglich, sie wurde aber insbesondere gewählt um die Darstellung anschaulich zu halten.

In Figur 3 ist ein erster Schwellenwert I1 eingezeichnet. Er liegt oberhalb des normalen Motorstroms, beispielsweise 20 % oberhalb des Motorstroms I, der bei einem normalen Fräsvorgang unter vom Hersteller des Kappenfräsers angegebenen Bedingungen vorliegt. Man erkennt, dass eine linke Gruppe 42 von sechs Stromwerten sich unterhalb des ersten Schwellenwertes I1 befindet. In der zweiten Gruppe 44 von Balken, die insgesamt sieben Stromwerte aus einem anderen Fräsvorgang aufweist, überschreiten einige Werte bzw. Signale den ersten Schwellenwert I1. Es ist zu erkennen, dass nun ein höherer Motorstrom I vorliegt als im Falle der linken Gruppe 42.

In der dritten Gruppe 46, die ganz rechts in Figur 3 zu finden ist, werden noch höhere Stromwerte I erreicht. Dies kann z. B. daran liegen, dass der Fräsvorgang mit einem höheren Anpressdruck durchgeführt wird. Die Werte liegen nun durchaus spürbar oberhalb des ersten Schwellenwertes I1. Die in Figur 3 gezeigten Werte werden zusammen mit dem jeweils zugehörigen Zeitwert in einer Wertetabelle im Speicher der Aufzeichnungseinheit abgespeichert. Man kennt dann zu den ausgewählten Zeitpunkten, an denen ein Fräsvorgang aktiv war, den jeweils zugehörigen Wert des Motorstroms I. Damit ist eine Zuordnung möglich, ab wann der Motorstrom einen gewissen Wert überschritten hat, wie dies z. B. in der mittleren 44 und rechten Gruppe 46 von Figur 3 der Fall ist.

Nur während eines Fräsvorgangs erfolgt eine Aufzeichnung. Wenn kein Fräsvorgang stattfindet, findet auch keine Aufzeichnung statt. Dadurch wird sehr viel Platz im Speicher der Aufzeichnungseinheit 34 gespart.

Es ist zu empfehlen, im Strommesser 30 eine Uhr anzuordnen, die jeweils die aktuelle Zeit abgibt. Das Uhrsignal enthält vorzugsweise auch ein Datum, es wird mit dem zeitlich zugehörigen Signal 31 des Motorstroms I verknüpft und in der genannten Wertetabelle abgespeichert. Dadurch kann man genau nachweisen, zu welcher Tageszeit die Stromüberschreitung aufgetreten ist.

Figur 4 zeigt ein Verfahren, bei dem nur die Signale 31 gespeichert werden, die oberhalb des ersten Schwellenwertes I1 liegen. Es ist noch ein zweiter Schwellenwert I2 vorgesehen, er hat einen Wert, der im Bereich des Höchstwertes des zulässigen Motorstroms liegt. Der Wert des ersten Schwellenwertes I1 kann durch Versuche ermittelt werden, man wählt einen Stromwert, der etwa 10 bis 50 % oberhalb des Wertes liegt, wie er bei normalen Fräsanwendungen festgestellt wird. Der Stromwert für den zweiten Schwellenwert I2 wird größer gewählt. Hier können Vorgaben des Herstellers des Antriebsmotors 20 verwendet werden, beispielsweise der maximale Motorstrom oder die maximale Leistungsaufnahme für den Antriebsmotor 20. Der zweite Schwellenwert I2 kann beispielsweise 20 % unterhalb des maximal zulässigen Stromwertes des Antriebsmotors 20 liegen.

Bei dem Vorgehen gemäß Figur 4 fallen alle diejenigen Messwerte weg, die unterhalb des ersten Schwellenwertes I1 liegen. Gespeichert werden nur solche Stromsignale, die oberhalb des ersten Schwellenwertes I1 liegen. Die anderen werden nicht berücksichtigt, beispielsweise in einer Vergleicherstufe abgeschnitten. In Figur 4 sind solche Stromwerte, die unterhalb des ersten Schwellenwertes I1 liegen, nicht sichtbar. Figur 4 zeigt eine erste Gruppe 48 links, in der vier Signale oberhalb des ersten Schwellenwertes liegen. In einer mittleren Gruppe 50 liegen ebenfalls vier Signale 31 oberhalb des ersten Schwellenwertes I1, zwei Signale 52 davon übersteigen sogar den zweiten Schwellenwert I2. Dies kann genutzt werden, um eine Alarmvorrichtung 40 auszulösen, die am Strommesser 30 angeschlossen ist. Sie kann optisch und/oder akustisch arbeiten, sie kann aber auch anderweitig eingesetzt werden. Signale wie die beiden 52 der mittleren Gruppe 50, die den zweiten Schwellenwert I2 übersteigen, können auch zu einer Steuerung eines zugehörigen Schweißroboters geleitet werden, sodass dieser veranlasst wird, den Anpressdruck zu verringern.

In der rechten Gruppe 54 gemäß Figur 4 sind fünf Stromwerte 31 nur geringfügig über dem ersten Schwellenwert I1.

In der Darstellung nach Figur 4 fallen Fräsvorgänge nicht auf, bei denen kein einzelner erfasster Wert für den Strom I oberhalb des ersten Schwellenwertes I1 liegt. Es ist vorteilhaft, wenn das am Beginn eines Fräsvorganges vorliegende Signal "Fräsvorgang ein" und das am Ende vorliegende Signal "Fräsvorgang aus" genutzt wird, um es als einfaches Ein-Aus-Signal in der Aufzeichnungseinheit 34, verknüpft mit der jeweiligen Uhrzeit, zu speichern. Dadurch hat man einen Überblick, wann überhaupt Fräsvorgänge stattgefunden haben.

### Bezugszeichenliste

- 20: Antriebsmotor
- 22: Fräsmesser
- 24: Gehäuse
- 26: Widerstand
- 28: Zuleitung
- 30: Strommesser
- 32: Ausgang von 30
- 34: Aufzeichnungseinheit
- 36: Ausgang von 34
- 38: Ausgangsanschluss
- 40: Alarmvorrichtung
- 42: linke Gruppe Fig. 3
- 44: mittlere Gruppe Fig. 3
- 46: rechte Gruppe Fig. 3
- 48: linke Gruppe Fig. 4
- 50: mittlere Gruppe Fig. 4
- 52: Signal mit erhöhtem Wert
- 54: rechte Gruppe Fig. 4

- M: Motor
- I: Motorstrom
- I1: 1. Schwellenwert
- I2: 2. Schwellenwert

## Patentansprüche

1. Kappenfräser zum Fräsen des Schweißbereichs von Punktschweißelektroden, der einen elektrischen Antriebsmotor (20) und mindestens ein Fräsmesser (22) aufweist, wobei ein Strommesser (30) vorgesehen ist, der in einer Zuleitung zum Antriebsmotor (20) angeordnet ist, und der Strommesser (30) während des Fräsens den Motorstrom I des Antriebsmotors (20) erfassen kann, **dadurch gekennzeichnet, dass** eine Aufzeichnungseinheit (34) vorgesehen ist, die den Wert des Motorstroms I zu einzelnen Zeitpunkten speichern kann, und die Aufzeichnungseinheit (34) derart ausgelegt ist, dass mindestens ein Schwellenwert I1 für den Motorstrom I festlegbar ist, und dass a) entweder eine Aufzeichnung in der Aufzeichnungseinheit (34) nur dann erfolgt, wenn ein höherer Strom als ein erster Schwellenwert I1 durch den Antriebsmotor (20) fließt, oder b) in der Aufzeichnungseinheit (34) die Anzahl der Überschreitungen des Schwellenwertes in Zuordnung zu einem Zeitsignal gespeichert ist.

2. Kappenfräser nach Anspruch 1, **dadurch gekennzeichnet, dass** die Aufzeichnungseinheit (34) einen Ausgangsanschluss (38) aufweist.

3. Kappenfräser nach Anspruch 1 oder 2, **dadurch gekennzeichnet, dass** eine Aufzeichnung in der Aufzeichnungseinheit (34) nur dann erfolgt, wenn ein höherer Strom als der erste Schwellenwert I1 durch den Antriebsmotor (20) fließt, und dass mindestens ein zweiter Schwellenwert I2 für den Motorstrom I festlegbar ist, und dass ein Signalgeber (40) vorgesehen ist, der ein akustisches, optisches und/oder elektrisches Signal (52) ausgeben kann, wenn ein zweiter Schwellenwert I2 überschritten ist, wobei I2 größer als I1 ist.

4. Kappenfräser nach einem der vorangegangenen Ansprüche, **dadurch gekennzeichnet, dass** in der Aufzeichnungseinheit (34) der Beginn eines Stromflusses durch den Antriebsmotor (20) und das Ende in Zuordnung zu einem Zeitsignal aufzeichenbar sind.

5. Kappenfräser nach einem der vorangegangenen Ansprüche, **dadurch gekennzeichnet, dass** der Strommesser (30) einen A/D-Wandler und einen Taktgeber aufweist.

6. Kappenfräser nach einem der vorangegangenen Ansprüche, **dadurch gekennzeichnet, dass** der Strommesser (30) eine Uhr aufweist, die ein Zeitsignal mit Datum ausgeben kann.

7. Kappenfräser nach einem der Ansprüche 2-6, **dadurch gekennzeichnet, dass** er eine Box (24) aufweist, die mit dem Antriebsmotor (20) verbunden ist und in der der Strommesser (30) und die Aufzeichnungseinheit (34) untergebracht sind und der Ausgangsanschluss (38) angeordnet ist.

8. Kappenfräser nach einem der Ansprüche 2-7, **dadurch gekennzeichnet, dass** der Ausgangsanschluss (38) eine Buchse für einen USB-Stick aufweist.

9. Kappenfräser nach einem der Ansprüche 2-8, **dadurch gekennzeichnet, dass** ein Speicher fest in der Aufzeichnungseinheit (34) eingebaut und/oder über den Ausgangsanschluss (38) lösbar mit der Aufzeichnungseinheit (34) verbunden ist.

## Claims

1. A tip dresser for milling the welding region of spot welding electrodes, which has an electric drive motor (20) and at least one cutter (22), wherein an ammeter (30) is provided that is disposed in a line to the drive motor (20), and the ammeter (30) is capable of detecting the motor current I of the drive motor (20) during cutting, **characterized in that** a recording unit (34) is provided, which is capable of storing the value of the motor current I at individual points in time, and the recording unit (34) is designed in such a way that at least one threshold value I1 for the motor current I can be set, and that a) either a recording in the recording unit (34) takes place only if a higher current than a first threshold value I1 flows through the drive motor (20), or b) the number of instances of the threshold being exceeded is stored in the recording unit (34), in association with a time signal.

2. The tip dresser according to claim 1, **characterized in that** the recording unit (34) has an output terminal (38).

3. The tip dresser according to claim 1 or 2, **characterized in that** a recording in the recording unit (34) takes place only if a higher current than the first threshold value I1 flows through the drive motor (20), and that at least one second threshold value 12 for the motor current I can be set, and that a signal generator (40) is provided which is capable of outputting an acoustic, optical and/or electrical signal (52) if a second threshold value 12 is exceeded, wherein 12 is greater than I1.

4. The tip dresser according to any one of the preceding claims, **characterized in that** the start of a current flow through the drive motor (20) and the end can be recorded, in association with a time signal, in the recording unit (34).

5. The tip dresser according to any one of the preceding claims, **characterized in that** the ammeter (30) has an A/D converter and a clock.

6. The tip dresser according to any one of the preceding claims, **characterized in that** the ammeter (30) has a timer that is capable of outputting a time signal including the date.

7. The tip dresser according to any one of the claims 2-6, **characterized in that** it has a box (24), which is connected to the drive motor (20) and in which the ammeter (30) and the recording unit (34) are accommodated and in which the output terminal (38) is disposed.

8. The tip dresser according to any one of the claims 2-7, **characterized in that** the output terminal (38) has a socket for a USB flash drive.

9. The tip dresser according to any one of the claims 2-8, **characterized in that** a storage unit is firmly installed in the recording unit (34) and/or detachably connected to the recording unit (34) via the output terminal (38).

## Revendications

1. Fraise à capot destinée à fraiser la zone de soudage d'électrodes de soudage par points, qui comprend un moteur d'entraînement électrique (20) et au moins une lame-fraise (22), dans laquelle un ampèremètre (30) est prévu qui est disposé dans une ligne d'alimentation vers le moteur d'entraînement (20) et l'ampèremètre (30) peut détecter le courant de moteur I du moteur d'entraînement (20) pendant le fraisage, **caractérisée par le fait qu'**une unité d'enregistrement (34) est prévue qui peut stocker la valeur du courant de moteur I à des instants individuels, et ladite unité d'enregistrement (34) est conçue de manière à ce que l'on puisse déterminer au moins une valeur de seuil I1 pour le courant de moteur I, et que a) soit un enregistrement n'a lieu dans l'unité d'enregistrement (34) que lorsqu'un courant supérieur à une première valeur de seuil I1 circule à travers le moteur d'entraînement (20), soit b) le nombre de dépassements de la valeur de seuil est stocké dans l'unité d'enregistrement (34) en association avec un signal horaire.

2. Fraise à capot selon la revendication 1, **caractérisée par le fait que** l'unité d'enregistrement (34) présente une borne de sortie (38).

3. Fraise à capot selon la revendication 1 ou 2, **caractérisée par le fait qu'**un enregistrement n'a lieu dans l'unité d'enregistrement (34) que lorsqu'un courant supérieur à la première valeur de seuil I1 circule à travers le moteur d'entraînement (20), et qu'au moins une deuxième valeur de seuil I2 pour le courant de moteur I est déterminable, et qu'un générateur de signal (40) est prévu qui peut délivrer un signal acoustique, optique et/ou électrique (52) lorsqu'une deuxième valeur de seuil I2 est dépassée, I2 étant supérieure à I1.

4. Fraise à capot selon l'une quelconque des revendications précédentes, **caractérisée par le fait que** dans l'unité d'enregistrement (34) peuvent être enregistrés le début d'une circulation de courant à travers le moteur d'entraînement (20) et la fin en association avec un signal horaire.

5. Fraise à capot selon l'une quelconque des revendications précédentes, **caractérisée par le fait que** l'ampèremètre (30) comprend un convertisseur analogique-numérique et un générateur de rythme.

6. Fraise à capot selon l'une quelconque des revendications précédentes, **caractérisée par le fait que** l'ampèremètre (30) comprend une horloge qui peut délivrer un signal horaire avec la date.

7. Fraise à capot selon l'une quelconque des revendications 2 à 6, **caractérisée par le fait qu'**elle comprend une boîte (24) qui est reliée au moteur d'entraînement (20) et dans laquelle sont logés l'ampèremètre (30) et l'unité d'enregistrement (34) et dans laquelle est disposée la borne de sortie (38).

8. Fraise à capot selon l'une quelconque des revendications 2 à 7, **caractérisée par le fait que** la borne de sortie (38) présente une prise femelle pour une clé USB.

9. Fraise à capot selon l'une quelconque des revendications 2 à 8, **caractérisée par le fait qu'**une mémoire est installée de manière permanente dans l'unité d'enregistrement (34) et/ou est connectée de manière amovible à l'unité d'enregistrement (34) par l'intermédiaire de la borne de sortie (38).
